# EUROPEAN PATENT APPLICATION

(11) **EP 0 848 483 A1**
(43) Date of publication of application: **17.06.1998**
(21) Application number: 97922115.7
(22) Date of filing: 20.05.1997
(51) Int. Cl.: H02K 37/14

(54) **METHOD OF MANUFACTURING STEPPING MOTOR AND YOKES THEREOF**

(30) Priority: 21.06.1996 JP 161320/96
(71) Applicant: NIPPON SEIKI CO., LTD., Nagaoka-shi, Niigata 940 (JP)
(72) Inventor: Satoh, Kouichi, Nagaoka-shi, Niigata 940 (JP); Numaya, Hiroyasu, Nagaoka-shi, Niigata 940 (JP); Jinushi, Kouichi, Nagaoka-shi, Niigata 940 (JP)
(74) Representative: Jackson, Richard Eric
(86) International application number: JP9701699
(87) International publication number: WO9749164

(57) **Abstract**

A stepping motor capable of increasing an accuracy of a step angle is provided, in which a magnet rotor (3) having a multiplicity of magnetic poles is provided in a peripheral surface, two pairs of yokes (11, 12, 21, 22) having a plurality of pole tooth portions (15, 16, 25, 26) opposing to the peripheral surface of the magnet rotor (3) are laminated and disposed and a first and second coils (5, 6) are provided between the respective yokes (11, 12, 21, 22) constituting the pairs to each other so as to constitute the stepping motor. In the structure, the yokes (11, 12, 21, 22) are made of the ferro-nickel (Fe-Ni) alloy.

## Description

### TECHNICAL FIELD

The present invention relates to a permanent magnet type stepping motor, and more particularly to an improvement of a yoke applied to this kind of stepping motor and a method of manufacturing the same.

### BACKGROUND ART

In conventional arts, a permanent magnet type stepping motor is widely used as an actuator part for various kinds of equipment, and in the recent years, the motor is used not only as a simple actuator but also as a movement for a measuring apparatus such as a meter and the like.

The permanent magnet type stepping motor is structured, as is well known, such as to magnetize a yoke having a pole tooth portion formed in opposing to a magnet rotor comprising a permanent magnet by supplying a signal (a current) to a coil so as to drive the magnet rotor in a stepping manner, and a cold rolled steel (SPC), a galvanized sheet iron (SEC) and the like have been generally used as a magnetic material constituting the yoke. However, in the Stepping motor using the yoke constituted by the SPC and the SEC, since a residual magnetism left in the yoke itself gives a bad influence to the step motion of the magnet rotor, a step angular accuracy is deteriorated. Particularly, in the case that this is used as a movement for the measuring apparatus such as the meter which requires an increased step angular accuracy, there has been a problem that a satisfactory performance can not obtained. Further, taking the influence due to such a residual magnetism into consideration, it is considered that the yoke is constituted by using a silicon steel or a malleable iron is used for the yoke material, however, in the case that the yoke is constituted by using a silicon steel or a malleable iron, it is necessary to perform an annealing treatment after a press process and further perform a nickel (Ni) plating or a zinc plating for preventing a rust, so that a deformation is easily generated at a plating treatment. Accordingly, there is a problem that the motor performance is deteriorated.

The invention is made by taking these points into consideration and an object thereof is to provide a stepping motor which can improve a step angular accuracy and to provide a method of manufacturing a yoke for a stepping motor which can give an anti-oxidation performance without any deformation due to a plating treatment.

### DISCLOSURE OF THE INVENTION

The invention will be explained with reference to the reference numerals attached in an embodiment in accordance with an aspect of the invention. In accordance with the invention, a magnet rotor having a multiplicity of magnetic poles is provided in a peripheral surface, two pairs of yokes having a plurality of pole tooth portions opposing to the peripheral surface of the magnet rotor are disposed in a laminating manner and a first and second coils are provided between the respective yokes constituting the pair, thereby constituting a stepping motor, and in the structure, a coercive force (Hc) of the yoke (the pole tooth portion) can be reduced by making the yoke of a ferro-nickel (Fe-Ni) alloy, so that a dispersion of the step angle of the magnet rotor affected by the residual magnetism left in the yoke (the pole tooth portion) can be reduced and an accuracy of the step angle can be improved.

Further, by setting an amount of Nickel (Ni) contained in the yoke made of the ferro-nickel alloy to about 30 weight percents, a stepping motor manufactured in a low cost and particularly having a high accuracy of the step angle can be obtained.

Still further, the invention can prevent a deformation due to the plating treatment and prevent an oxidation (rust) due to a magnetic annealing from generating by using an alloy plate made of a ferro-nickel (Fe-Ni) alloy for the yoke material at a time of forming the yoke, performing a magnetic annealing (a second process) after performing a press process (a first process) for changing the alloy plate to the yoke shape, and not performing a plating treatment after the process.

### BRIEF DESCRIPTION OF DRAWINGS

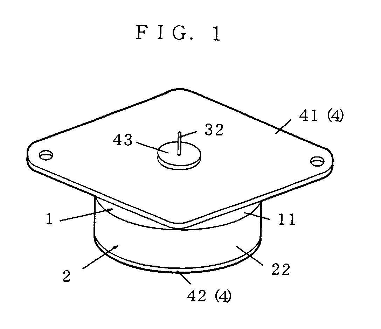

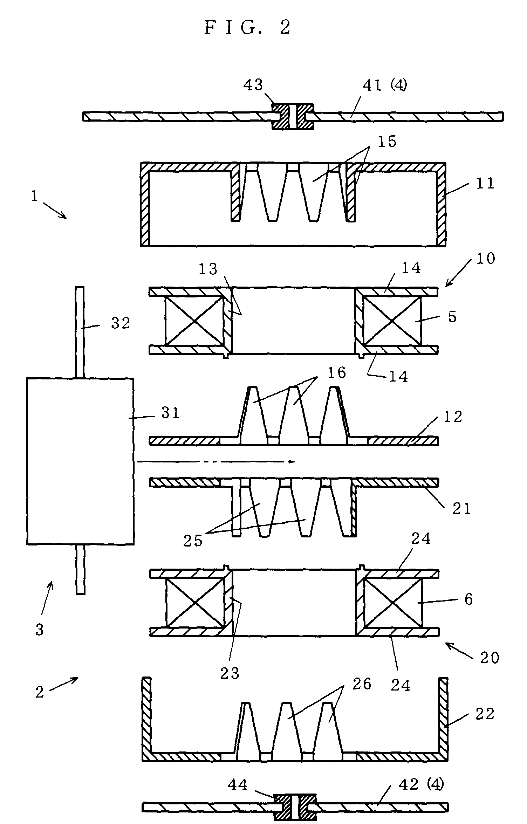

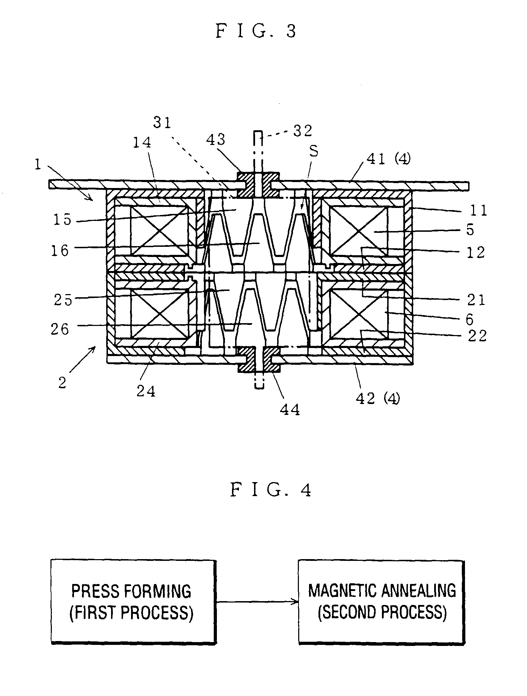

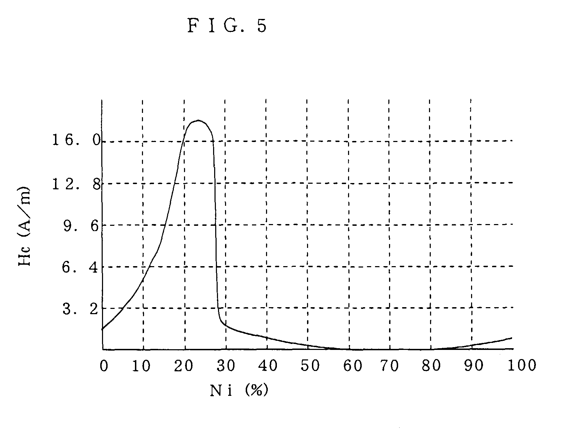

Fig. 1 is a perspective view which shows an appearance of a stepping motor in accordance with an embodiment of the invention, Fig. 2 is an exploded cross sectional view of the stepping motor shown in Fig. 1, Fig. 3 is a cross sectional view of Fig. 1, Fig. 4 is a block diagram which shows a method of manufacturing a yoke and Fig. 5 is a graph which shows a normal characteristic of a ferro-nickel (Fe-Ni) alloy.

### BEST MODE FOR CARRYING OUT THE INVENTION

All of the attached drawings show an embodiment of the invention, and the embodiment of the invention will be explained below on the basis of these.

In Fig. 1 to Fig. 3, a stepping motor comprises a first stator set 1 position in an upper portion, a second stator set 2 having the same structure as this and positioned in a lower portion thereof, a magnet rotor 3 disposed within each of these stator rotors 1 and 2 and a pair of bearing plates 4 axially supporting the magnet rotor 3.

The first stator set 1 comprises a first annular bobbin 10 having a first coil 5 wound and made of a synthetic resin and first and second yokes 11 and 12 made of a magnetic material, and the first annular bobbin 10 has a cylindrical coil portion 13 having both ends open and a pair of coil guide portions 14 projecting to a peripheral direction in both ends close to the opening of the coil portion 13 and having a flange shape.

Both of the first and second yokes 11 and 12 have an annular shape, the first yoke 11 and the second yoke 12 are respectively formed as a cup shape and a planner plate shape, and these are relatively disposed in a coaxial positional relation to each other with respect to the first annular bobbin 10. Further, in each of the yokes 11 and 12, a plurality of pole tooth portions 15 and 16 extending to an inner periphery of the coil portion 13 of the first annular bobbin 10 and combined with each other at a constant pitch in a comb manner are formed.

The second stator set 2 comprises a second annular bobbin 20 having a second coil 6 wound and made of a synthetic resin and third and fourth yokes 21 and 22 made of a magnetic material, and the second annular bobbin 20 has a cylindrical coil portion 23 having both ends open and a pair of coil guide portions 24 projecting to a peripheral direction in both ends close to the opening of the coil portion 23 and having a flange shape, in the same manner as the first annular bobbin 10. Both of the third and fourth yokes 21 and 22 also have an annular shape, in the same manner as the first and second yokes 11 and 12, the third yoke 21 and the fourth yoke 22 are respectively formed as a planner plate shape and a cup shape, and these are relatively disposed in a coaxial positional relation to each other with respect to the second annular bobbin 20. Further, in each of the yokes 21 and 22, a plurality of pole tooth portions 25 and 26 extending to an inner periphery of the coil portion 23 of the second annular bobbin 20 and combined with each other at a constant pitch in a comb manner are formed.

Further, the respective stator sets 1 and 2 are coaxially disposed in a laminated manner, are vertically (in an axial direction of the magnet rotor 3) communicated with each other in the internal portions and form a hollow portion S open in the same direction, and the magnet rotor 3 is built in the hollow portion S.

The magnet rotor 3 is provided with a permanent magnet 31 in which a plurality of magnetic poles N and S are attached and magnetized to the peripheral portion at a constant pitch in an alternating manner and a rotating axis 32 fixedly attached to a center of the permanent magnet 31, and in an assembling state shown in Fig. 3, a magnetic pole of the permanent magnet 31 is opposed to the pole tooth portions 15, 16, 25 and 26 of the first to fourth yokes 11, 12, 21 and 22 at a predetermined interval.

Further, the bearing plate 4 comprises an upper bearing plate 41 fixed to the first stator set 1 and a lower bearing plate 42 fixed to the second stator set 2, and bearing portions 43 and 44 comprising an oilless bearing member are attached thereto so as to receive and hold the magnet rotor 3 built within each of the stator sets 1 and 2 through the rotating axis 32.

In this structure, when a signal (a current) is supplied to the first coil 5 or the second coil 6 through a drive circuit which is not illustrated, the first or second coil 5 or 6 is energized, whereby the pole tooth portions 15 and 16 of the first and second yokes 11 and 12 or the pole tooth portions 25 and 26 of the third and fourth yokes 21 and 22 respectively forming a pair with respect to each other are magnetized, so that a rotating force is applied to the magnet rotor 3 by a magnetic function between the pole tooth portions 15 and 16 or the pole tooth portions 25 and 26, and the magnetic pole of the opposing magnet rotor 3 (the permanent magnet 31). Accordingly, a continuous step drive to a normal and reverse directions of the magnet rotor 3 can be performed by controlling the signal supplied to each of the coils 5 and 6, and at this time, when the signal supplied to each of the coils 5 and 6 is controlled, for example, in response to a running speed of a vehicle, it can be used as a movement for a speed meter.

Next, each of the yokes 11, 12, 21 and 22 will be explained in detail. As shown in Fig. 4, each of these is formed by performing a magnetic annealing under a reducing atmosphere or under a vacuum atmosphere after performing a press process (a first process) a ferro-nickel (Fe-Ni) alloy plate to a shape of the yokes 11, 12, 21 and 22, thereby improving a magnetic characteristic and an anti-oxidation (an anticorrosion) characteristic, so that a plating treatment for anticorrosion after the magnetic annealing is not required.

Since the ferro-nickel (Fe-Ni) alloy constituting each of the yokes 11, 12, 21 and 22 has a coercive force (Hc) significantly smaller (not more than about one tenth) than that of the SPC, in the case of using the yokes 11, 12, 21 and 22 made of the ferro-nickel (Fe-Ni) alloy having a small coercive force (Hc) in this manner, a residual magnetism left in the yokes 11, 12, 21 and 22 (the pole teeth 15, 16, 25 and 26) can be reduced, so that the influence of difference (the dispersion) of the step angle which the residual magnetism gives to the magnet rotor 3 is reduced, thereby increasing an accuracy of the step angle.

Further, it is preferable to set a ratio of nickel (Ni) contained in the ferro-nickel (Fe-Ni) alloy to about 30 to 50 weight percents. The reason is that, for example, as described in page 418 of Electronic Technology Handbook (1951), and as shown in Fig. 5, as a general characteristic of a ferro-nickel (Fe-Ni) alloy, when a contained ratio of nickel (Ni) is less than about 30 %, the coercive force (Hc) is relatively large and a nature becoming a non-magnetic at the normal temperature is exhibited, when the contained ratio of nickel (Ni) is equal to or more than about 50 %, the coercive force (Hc) is small, and when the contained ratio of nickel (Ni) is about 75 % to about 85 %, the magnetic characteristic is improved (not shown) but a material cost is increased.

As mentioned above, in accordance with the invention, since the magnet rotor 3 having a multiplicity of magnetic poles is provided in the peripheral surface, two pairs of yokes 11, 12, 21 and 22 having a plurality of pole tooth portions 15, 16, 25 and 26 opposing to the peripheral surface of the magnet rotor 3 are laminated and disposed, and the first and second coils 5 and 6 are provided between the respective yokes 11, 12, 21 and 22 constituting a pair with respect to each other so as to constitute the stepping motor, and in this structure, the yokes 11, 12, 21 and 22 are made of the ferro-nickel (Fe-Ni) alloy, the coercive force (Hc) of the yokes 11, 12, 21 and 22 (the pole tooth portions 15, 16, 25 and 26) can be reduced, so that the influence of the dispersion in the step angle which the residual magnetism left in the yokes 11, 12, 21 and 22 (the pole tooth portions 15, 16, 25 and 26) give the magnet rotor 3 can be reduced, thereby increasing the accuracy of the step angle.

Further, in the present embodiment, since the contained ratio of nickel (Ni) contained in the ferro-nickel (Fe-Ni) alloy constituting each of the yokes 11, 12, 21 and 22 is set to about 30 to 50 weight percents, the yokes 11, 12, 21 and 22 can be made particularly small in the coercive force (Hc) and inexpensive in the material cost among the yokes 11, 12, 21 and 22 made of the ferro-nickel (Fe-Ni) alloy having a small coercive force (Hc), whereby a stepping motor having a particular high accuracy of the step angle while having a low cost can be realized.

Still further, in the present embodiment, at a time of forming each of the yokes 11, 12, 21 and 22, since an alloy plate made of a ferro-nickel (Fe-Ni) alloy is used as a material for the yokes 11, 12, 21 and 22, and the alloy plate is magnetically annealed (the second process) after being pressed to the shape of the yokes 11, 12, 21 and 22 (the first process), thereby preventing the oxidization (the rust) from generating, the plating treatment is not required and there is no deformation of the yokes 11, 12, 21 and 22 including the pole tooth portions 15, 16, 25 and 26 generated at a time of the plating treatment. Accordingly, the motor having a high accuracy can be obtained, and a manufacture cost can be reduced at a degree that the plating treatment is omitted.

In the present embodiment, there is shown the case that among the respective yokes 11, 12, 21 and 22, the first and fourth yokes 11 and 22 are formed to a cup shape and the second and third yokes 12 and 21 are formed to a planner plate shape and the first and second yokes 11 and 12 and the third and fourth yokes 21 and 22 are combined with each other, however, the structure may be made such that all the respective yokes 11, 12, 21 and 22 are formed to a planner plate shape, and each of the planner plate like yokes 11, 12, 21 and 22 is received within a case independently formed by a magnetic material so as to constitute a part of the magnetic circuit. At this time, the magnetic material constituting the case can be made of the ferro-nickel (Fe-Ni) alloy in the same manner as the yokes 11, 12, 21 and 22.

### INDUSTRIAL APPLICABILITY

As mentioned above, the invention has been explained with exemplifying the two-phase or four-phase permanent magnet type stepping motor, however, the invention is not limited to this and can be also applied to a yoke structure for a single-phase or multiple-phase at least four-phase permanent magnet type stepping motor.

### FIG. 4

PRESS FORMING (FIRST PROCESS)
MAGNETIC ANNEALING (SECOND PROCESS)

### FIG. 5

CONTAINED RATIO OF NICKEL (Ni)
COERCIVE FORCE

## Claims

1. A stepping motor comprising a magnet rotor having a multiplicity of magnetic poles in a peripheral surface, a yoke having a plurality of pole tooth portions opposing to the peripheral surface of the magnet rotor and a coil giving a rotating force to said magnet rotor by magnetizing the yoke, wherein said yoke is made of a ferro-nickel (Fe-Ni) alloy.

2. A stepping motor as recited in claim 1, wherein said ferro-nickel alloy contains about 30 to 50 weight percents of nickel (Ni).

3. A method of manufacturing a yoke for a stepping motor, wherein a magnetic annealing is performed after an alloy plate made of a ferro-nickel (Fe-Ni) alloy is press-formed to a yoke shape.
